# EUROPEAN PATENT APPLICATION

(11) **EP 4 428 788 A1**
(43) Date of publication of application: **11.09.2024**
(21) Application number: 22888968.9
(22) Date of filing: 02.09.2022
(51) Int. Cl.: G06Q 10/08, B65G 1/137, B65G 1/04

(54) **METHOD AND APPARATUS FOR DETERMINING STORAGE POSITION OF GOODS, AND DEVICE, SYSTEM AND MEDIUM**

(30) Priority: 04.11.2021 CN 202111302323
(71) Applicant: Beijing Jingdong Qianshi Technology Co., Ltd., Beijing 100176 (CN)
(72) Inventor: LIU, Xu, Beijing 100176 (CN); ZHANG, Xundong, Beijing 100176 (CN); SONG, Guoku, Beijing 100176 (CN); WANG, Xianwang, Beijing 100176 (CN); WU, Mingfu, Beijing 100176 (CN)
(74) Representative: FDST Patentanwälte
(86) International application number: PCT/CN2022/116681
(87) International publication number: WO 2023/077937

(57) **Abstract**

A method and apparatus for determining a goods storage location, and a device, a system and a medium are involved. In the method, a host computer acquires a goods weight of a piece of goods to be put in storage, and then acquires, in accordance with the goods weight and a pre-acquired mapping relationship, target storage location information determined for the piece of goods to be put in storage, wherein the mapping relationship is a corresponding relationship between offset information, a weight and storage location information of each piece of goods, and the offset information includes an offset distance and/or an offset angle. When storage location planning is performed on a piece of goods, the storage location of the piece of goods is comprehensively planned by taking the impact of the location of the piece of goods on offset information into consideration, thereby reducing the offset of the piece of goods under the impact of a shuttle vehicle, and preventing a problem of a failure to retrieve the piece of goods caused by too large an offset of the piece of goods.

## Description

The application claims priority to CN Patent Application No. 202111302323.2, entitled "Method and Apparatus for Determining Goods Storage Location, Device, System and Medium", which was filed with China Patent Office on November 4, 2021, and the contents of which are hereby incorporated by reference in its entirety.

### Technical Field

The disclosure relates to the technical field of logistics, and in particular relates to a method and apparatus for determining a goods storage location, a device, a system and a medium.

### Background

With the development of computer and Internet technologies, there are more and more scenarios where the computer technology is applied in the field of logistics. In the current warehousing system, it is comparatively common to use devices such as an intelligent shuttle vehicle to store and retrieve goods in a warehouse.

In the prior art, in the process of storing and retrieving goods, the host computer plans, in accordance with the storing and retrieving frequencies of the goods, the goods with high storing and retrieving frequencies in locations close to the hoister, and the goods with low storing and retrieving frequencies in locations away from the hoister so as to reduce the round-trip distance of the shuttle vehicle when storing and retrieving the goods. During actual use, the actions of walking and retrieving and placing the goods by the shuttle vehicle will cause vibrations on racks, and the vibrations of the racks will cause slight displacements of the goods in the storage locations. With the increase of time, the slight displacements will be gradually accumulated so as to affect the actions of retrieving and placing boxes by the shuttle vehicle.

To sum up, the existing planning manners for goods storage locations only consider distances without considering problems such as a failure to retrieve goods that may be caused by displacements and other issues. At present, there is no planning method for storage locations that can comprehensively consider various factors that affect goods offsets.

### Summary

The embodiments of the disclosure provide a method and apparatus for determining a goods storage location, a device, a system and a medium, and provide a technical solution of storage location planning that can comprehensively consider various factors that affect goods offsets.

According to a first aspect, the embodiments of the disclosure provide a method for determining a goods storage location, which is applied to a host computer, the method comprising: acquiring a goods weight of a piece of goods to be put in storage; acquiring, in accordance with the goods weight and a pre-acquired mapping relationship, target storage location information determined for the piece of goods to be put in storage; wherein the mapping relationship is a corresponding relationship between offset information, a weight and storage location information of each piece of goods, and the offset information includes an offset distance and/or an offset angle.

In a specific implementation scheme, the method further comprises: acquiring a storing and retrieving frequency of the piece of goods to be put in storage; correspondingly, the step of acquiring, in accordance with the goods weight and a pre-acquired mapping relationship, target storage location information determined for the piece of goods to be put in storage comprising: acquiring, in accordance with the goods weight, the storing and retrieving frequency and the mapping relationship, the target storage location information determined for the piece of goods to be put in storage.

In a specific implementation scheme, the method further comprises: sending, in accordance with the target storage location information, to a shuttle vehicle a command for putting goods in storage for instructing the shuttle vehicle to place the piece of goods to be put in storage in a location indicated by the target storage location information.

In a specific implementation scheme, the step of acquiring, in accordance with the goods weight and a pre-acquired mapping relationship, target storage location information determined for the piece of goods to be put in storage comprises: determining, in accordance with the goods weight and the mapping relationship, a storage location with the smallest offset information corresponding to the goods weight in racks as a target storage location of the piece of goods to be put in storage to obtain the target storage location information.

In a specific implementation scheme, the step of acquiring, in accordance with the goods weight, the storing and retrieving frequency and the mapping relationship, the target storage location information determined for the piece of goods to be put in storage comprises: determining, in accordance with the storing and retrieving frequency of the piece of goods to be put in storage, a target goods partition that satisfies a preset frequency optimization strategy in racks, wherein the frequency optimization strategy indicates that the higher the storing and retrieving frequency of the piece of goods is, the closer to a hoister the piece of goods is, and the rack includes a plurality of goods partitions that are allocated in advance in accordance with distances from a post and distances from a guide rail; determining, in accordance with the goods weight and the mapping relationship, a storage location with the smallest offset information corresponding to the goods weight in the target goods partition as a target storage location of the piece of goods to be put in storage to obtain the target storage location information.

In a specific implementation scheme, the step of acquiring, in accordance with the goods weight, the storing and retrieving frequency and the mapping relationship, the target storage location information determined for the piece of goods to be put in storage comprises: determining, in accordance with the goods weight and the mapping relationship, a plurality of storage locations with the offset information corresponding to the goods weight being less than a preset threshold in racks; determining, in accordance with the storing and retrieving frequency of the piece of goods to be put in storage, a target storage location that satisfies a preset frequency optimization strategy from the plurality of storage locations to obtain the target storage location information, wherein the frequency optimization strategy indicates that the higher the storing and retrieving frequency of the piece of goods is, the closer to a hoister the piece of goods is.

In a specific implementation scheme, before the step of acquiring, in accordance with the goods weight and a pre-acquired mapping relationship, target storage location information determined for the piece of goods to be put in storage, the method further comprises: receiving the offset information of the piece of goods in each storage location reported by the shuttle vehicle in an inspection process; storing the offset information of the piece of goods in each storage location.

In a specific implementation scheme, the method further comprises: receiving, when each piece of goods is put in storage, the weight of the piece of goods reported by a weighing conveyor line; storing, after each piece of goods is put in storage, the weight of each piece of goods and the storage location information of each piece of goods.

In a specific implementation scheme, the method further comprises: performing a statistical analysis for the weights, storage location information, and offset information of all pieces of goods stored in a storage space to obtain the mapping relationship.

In another specific implementation scheme, the step of acquiring a goods weight of a piece of goods to be put in storage comprises: receiving the goods weight of the piece of goods to be put in storage reported by the weighing conveyor line.

In another specific implementation scheme, the step of acquiring a storing and retrieving frequency of the piece of goods to be put in storage comprises: acquiring, in accordance with configuration information of the piece of goods to be put in storage input by a user or pre-acquired, the storing and retrieving frequency of the piece of goods to be put in storage.

According to a second aspect, the embodiments of the disclosure provide an apparatus for determining a goods storage location, comprising:
an acquisition module for acquiring a goods weight and a storing and retrieving frequency of a piece of goods to be put in storage; a processing module for acquiring, in accordance with the goods weight and a pre-acquired mapping relationship, target storage location information determined for the piece of goods to be put in storage; wherein the mapping relationship is a corresponding relationship between offset information, a weight and storage location information of each piece of goods, and the offset information includes an offset distance and/or an offset angle.

In a specific implementation scheme, the acquisition module is further used for: acquiring a storing and retrieving frequency of the piece of goods to be put in storage; correspondingly, the processing module is specifically used for: acquiring, in accordance with the goods weight, the storing and retrieving frequency and the mapping relationship, the target storage location information determined for the piece of goods to be put in storage.

In a specific implementation scheme, the apparatus further comprises: a sending module for sending, in accordance with the target storage location information, to a shuttle vehicle a command for putting goods in storage for instructing the shuttle vehicle to place the piece of goods to be put in storage in a location indicated by the target storage location information.

In a specific implementation scheme, the processing module is specifically used for: determining, in accordance with the goods weight and the mapping relationship, a storage location with the smallest offset information corresponding to the goods weight in the storage locations of racks as a target storage location of the piece of goods to be put in storage to obtain the target storage location information.

In a specific implementation scheme, the processing module is specifically used for: determining, in accordance with the storing and retrieving frequency of the piece of goods to be put in storage, a target goods partition that satisfies a preset frequency optimization strategy in racks, wherein the frequency optimization strategy indicates that the higher the storing and retrieving frequency of the piece of goods is, the closer to a hoister the piece of goods is, and the rack includes a plurality of goods partitions that are allocated in advance in accordance with distances from a post and distances from a guide rail; determining, in accordance with the goods weight and the mapping relationship, a storage location with the smallest offset information corresponding to the goods weight in the target goods partition as a target storage location of the piece of goods to be put in storage to obtain the target storage location information.

In a specific implementation scheme, the processing module is specifically used for: determining, in accordance with the goods weight and the mapping relationship, a plurality of storage locations with the offset information corresponding to the goods weight being less than a preset threshold in racks; determining, in accordance with the storing and retrieving frequency of the piece of goods to be put in storage, a target storage location that satisfies a preset frequency optimization strategy from the plurality of storage locations to obtain the target storage location information, wherein the frequency optimization strategy indicates that the higher the storing and retrieving frequency of the piece of goods is, the closer to a hoister the piece of goods is.

In a specific implementation scheme, the apparatus further comprises: a receiving module for receiving the offset information of the piece of goods in each storage location reported by the shuttle vehicle in an inspection process; a storage module for storing the offset information of the piece of goods in each storage location.

In a specific implementation scheme, the receiving module is further used for receiving, when each piece of goods is put in storage, the weight of the piece of goods reported by a weighing conveyor line; the storage module is further used for storing, after each piece of goods is put in storage, the weight of each piece of goods and the storage location information of each piece of goods.

In another specific implementation scheme, the receiving module is further used for: performing a statistical analysis for the weights, storage location information, and offset information of all pieces of goods stored in a storage space to obtain the mapping relationship.

In another specific implementation scheme, the acquisition module is specifically used for: receiving the goods weight of the piece of goods to be put in storage reported by the weighing conveyor line.

In another specific implementation scheme, the acquisition module is specifically used for: acquiring, in accordance with configuration information of the piece of goods to be put in storage input by a user or pre-acquired, the storing and retrieving frequency of the piece of goods to be put in storage.

According to a third aspect, the embodiments of the disclosure provide a host computer, comprising: a processor, a memory, and a communication interface; the memory being used for storing executable instructions of the processor; wherein the processor is configured to perform any method for determining a goods storage location according to the first aspect by executing the executable instructions.

According to a fourth aspect, the embodiments of the disclosure provide a shuttle vehicle system, comprising: the host computer according to the third aspect, as well as a shuttle vehicle, a hoister and a weighing conveyor line respectively communicating and connected with the host computer; wherein the shuttle vehicle is used for putting the goods in storage, delivering the goods from storage, and inspecting the goods in accordance with instructions from the host computer, the hoister is used for cooperating with the shuttle vehicle to lift the goods in accordance with the instructions from the host computer, and the weighing conveyor line is used for determining the weight of each piece of goods.

According to a fifth aspect, the embodiments of the disclosure provide a readable storage medium, on which a computer program is stored, the computer program, when executed by a processor, performing any method for determining a goods storage location according to the first aspect.

According to a sixth aspect, the embodiments of the disclosure provide a computer program product, comprising a computer program, which, when executed by a processor, performs any method for determining a goods storage location according to the first aspect.

The embodiments of the disclosure provide a method and apparatus for determining a goods storage location, a device, a system and a medium. In the method, the host computer acquires a goods weight of a piece goods to be put in storage, and then acquires, in accordance with the goods weight, the storing and retrieving frequency and a pre-acquired mapping relationship, the target storage location information determined for the piece of goods to be put in storage, wherein the mapping relationship is a corresponding relationship between offset information, a weight and storage location information of each piece of goods, and the offset information includes an offset distance and/or an offset angle. When it is required to perform storage location planning on goods, the locations and weights of the goods and the offset information corresponding to the goods are analyzed in advance to obtain the aforesaid mapping relationship, and when a specific piece of goods is put in storage and the storage location thereof is determined, the storage location of the piece of goods is comprehensively planned by taking the impacts of the location and weight of the piece of goods on the offset information into consideration, thereby reducing the offset of the piece of goods under the impact of a shuttle vehicle, and preventing problems such as a failure to retrieve the piece of goods caused by too large an offset of the piece of goods.

### Brief Description of the Drawings

In order to more clearly describe the technical solutions in the embodiments of the disclosure or the prior art, figures to be used in the descriptions of the embodiments or the prior art will be briefly introduced below. It is apparent that the figures in the descriptions below are only some embodiments of the disclosure, and those skilled in the art may also obtain other figures based on these figures without making inventive efforts.
FIG. 1 is a schematic diagram of a structure of a shuttle vehicle provided by the disclosure;
FIG. 2 is a schematic diagram of the inspection of the shuttle vehicle provided by the disclosure;
FIG. 3 is a schematic diagram of the inspection of the shuttle vehicle to acquire an offset provided by the disclosure;
FIG. 4 is a schematic diagram of structures of a rack, a hoister and the shuttle vehicle provided by the disclosure;
FIG. 5 is a schematic diagram of putting goods in storage by a shuttle vehicle system provided by the disclosure;
FIG. 6 is a schematic diagram of the shuttle vehicle system provided by the disclosure;
FIG. 7 is a flow chart of Embodiment I of a method for determining a goods storage location provided by the disclosure;
FIG. 8 is a flow chart of Embodiment II of the method for determining a goods storage location provided by the disclosure;
FIG. 9 is a schematic diagram of the function of the shuttle vehicle system provided by the disclosure;
FIG. 10 is a schematic diagram of a structure of Embodiment I of an apparatus for determining a goods storage location provided by the disclosure;
FIG. 11 is a schematic diagram of a structure of Embodiment II of the apparatus for determining a goods storage location provided by the disclosure;
FIG. 12 is a schematic diagram of a structure of Embodiment III of the apparatus for determining a goods storage location provided by the disclosure; and
FIG. 13 is a schematic diagram of a structure of an embodiment of a host computer provided by the disclosure.

### Detailed Description

In order to make the object, technical solutions and advantages of the embodiments of the disclosure be easy to understand, the technical solutions in the embodiments of the disclosure will be clearly and completely described below by taking the figures in the embodiments of the disclosure into consideration. It is apparent that the described embodiments are part of the embodiments rather than all of the embodiments of the disclosure. All of the other embodiments made by those skilled in the art under the motivation given in the embodiments based on the embodiments in the disclosure fall within the scope of protection of the disclosure.

The terms "first", "second", "third", "fourth", and so on (if present) in the Description and Claims and the aforesaid figures of the disclosure are used to distinguish similar objects and are not necessarily used to describe a specific order or sequence order. It should be understood that data used in this way are interchangeable under appropriate circumstances, so that the embodiments of the disclosure described herein can be carried out in sequences other than those illustrated or described herein. In addition, the terms "include" and "have" as well as any variations thereof are intended to cover non-exclusive inclusions, e.g., a process, method, system, product or device including a series of steps or units is not necessarily limited to those clearly listed, but may include other steps or unit not clearly listed or inherent to the process, method, product or device.

In the current shuttle vehicle system, the movements of the shuttle vehicle in the processes of putting the goods in storage and delivering the goods from storage will produce vibrations, and the vibrations of the racks over a long time will cause displacements of the goods. After being accumulated for a comparatively long time, the displacements are increased, which easily results in problems such as that in the subsequent process of delivering the goods from storage, the shuttle vehicle cannot accurately retrieve the goods in accordance with the instructions. The current allocation of the goods storage locations only follows the principle that the goods with high storing and retrieving frequencies are close to the hoister without considering factors such as offsets. At present, there is no planning solution for storage locations that can comprehensively consider various factors such as the distance that affect offsets.

With respect to the problems existing in the prior art, the disclosure provides a method for automatically optimizing a goods storage location in a shuttle vehicle three-dimensional garage, which comprehensively considers the goods weight as well as possible offsets, vibrations, and so on in different storage locations of the racks, and uses the host computer to allocate appropriate storage locations for different pieces of goods to reduce the impacts of the vibrations on the displacements of the goods.

In all the specific implementations of the disclosure, it should be understood that a piece of goods refers to the piece of good itself as well as a container. The container herein may be a material box, a turnover box, a pallet, or the like, and the solution does not make limitations therefor. If the piece of goods itself does not require an additional container, it refers to the piece of goods itself.

The goods weight refers to the sum of the weight of the piece of goods itself and the weight of a container. The container herein may be a material box, a turnover box, a pallet, or the like, and the solution does not make limitations therefor. If the piece of goods itself does not require an additional container, the goods weight refers to the weight of the piece of goods itself.

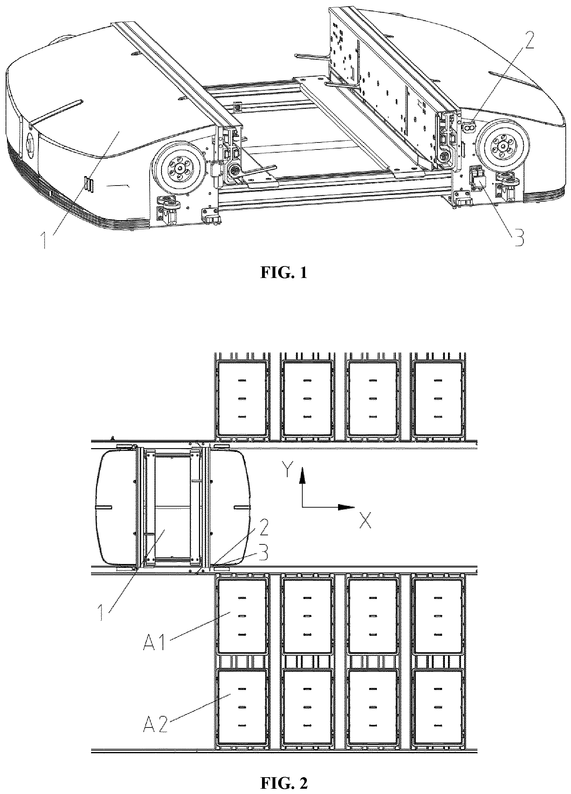

FIG. 1 is a schematic diagram of a structure of a shuttle vehicle provided by the disclosure. As shown in FIG. 1, at the device level, each of both sides of a head or a tail of a shuttle vehicle 1 is provided with a laser ranging module 2. In cooperation with a positioning sensor 3, a displacement sensor and a processor originally located on the shuttle vehicle, by inspecting the goods on the racks during normal operations of putting the goods in storage and delivering the goods from storage, the shuttle vehicle may obtain the offset and offset angle data of the goods in respective locations on the racks, and upload the data to the host computer.

FIG. 2 is a schematic diagram of the inspection of the shuttle vehicle provided by the disclosure. As shown in FIG. 2, the shuttle vehicle 1 walks in the tunnel direction (X direction), and the laser ranging module 2 emits a laser signal in the direction of a piece of goods A1. When the laser signal irradiates the piece of goods A1, the laser signal reflected back from the piece of goods A1 will be received, and then the distance between the laser ranging module 2 and the piece of goods A1 is obtained by measurement, a processor receives the distance value and compares it with a system preset value, and if an error value between the received distance value and the system preset value is within the range of the preset error E1, the shuttle vehicle 1 continues to walk till the laser ranging module 2 cannot receive the signal reflected back or the signal reflected back exceeds the range of the preset error E1.

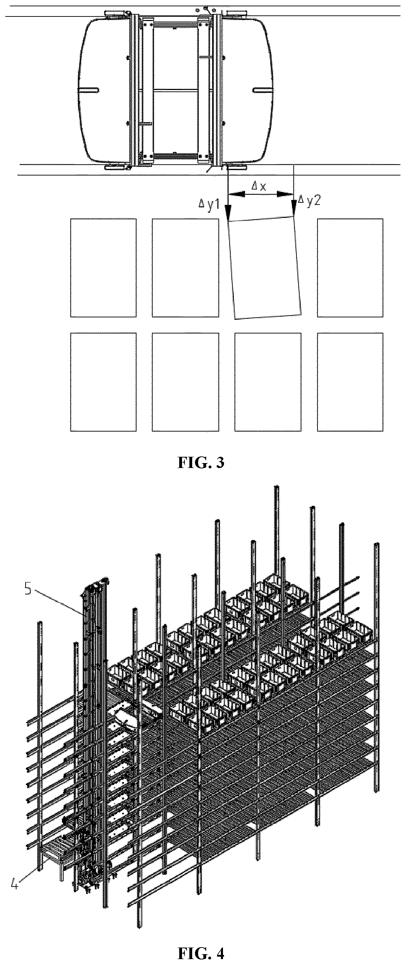

In the process from the laser ranging module 2 starting receiving the reflected laser signal within the range of the preset error E1 to the laser ranging module 2 stopping receiving the signal, the distances Δy1 and Δy2 between the laser ranging module 2 and the piece of goods A1 may be obtained and the distance traveled by the shuttle vehicle 1 also may be obtained by calculation via the displacement sensor, that is, the distance Δx between the leftmost side and the rightmost side of the face of the piece of goods A1 close to the shuttle vehicle 1 (FIG. 3 is a schematic diagram of the inspection of the shuttle vehicle to acquire an offset provided by the disclosure, and as shown in FIG. 3, at this time, the piece of goods A1 may be normal in terms of the location and the angle, or parallelly offset, or rotationally parallel, or both parallelly offset and rotationally offset). By taking the state of the positioning sensor 3 and the value of the displacement sensor into consideration, the offset distance and the offset angle of the piece of goods A1 may be determined. If the offset distance and the offset angle are within the allowable error ranges, the shuttle vehicle 1 may continue to inspect the piece of goods in the next goods location. If the offset distance and/or the offset angle exceeds the allowable error range, the piece of goods A1 may be retrieved to the vehicle by adjusting the location of the shuttle vehicle 1, and then the shuttle vehicle 1 is positioned to the correct location to place the piece of goods A1 into the goods location, and the shuttle vehicle 1 may achieve repositioning of the piece of goods A1 by retrieving and placing the piece of goods A1.

If there are two pieces of goods A1 and A2 in the depth direction, the offset distance and the offset angle of the box A1 may be determined in accordance with the distance value measured by the laser ranging module 2, the distance between the leftmost side and the rightmost side of the face of the piece of goods A1 close to the shuttle vehicle 1, and the state of the positioning sensor 3. According to the measured data in physical engineering, the offset distance and the offset angle of the piece of goods A1 are greater than the corresponding values of the piece of goods A2, so if the offset distance and the offset angle of the piece of goods A1 are within the error allowable ranges, neither the piece of goods A1 nor the piece of goods A2 is required to be repositioned; if the offset distance and the offset angle of the piece of goods A1 exceed the allowable error ranges, the piece of goods A1 may be first retrieved and temporarily placed on the vehicle by adjusting the shuttle vehicle 1, then the offset distance and the offset angle of the piece of goods A2 are detected by the shuttle vehicle 1, and if the offset distance and the offset angle of the piece of goods A2 are within the allowable error ranges, the piece of goods A2 is not required to be repositioned, and the piece of goods A1 is directly placed in the goods location to achieve repositioning. If the offset distance and the offset angle of the piece of goods A2 exceed the error allowable ranges, the shuttle vehicle 1 first places the piece of goods A1 in another empty goods location for temporary storage, then repositions the piece of goods A2, and finally retrieves the piece of goods A1 and places it in the original goods location to achieve repositioning. In the process, the goods on the opposite side of the tunnel are inspected using the laser ranging module on the other side of the shuttle vehicle 1, with the same process and principle, and so far, the inspection of the goods in racks in this column is completed and the inspection of the goods in racks in the next column may be performed.

In the process of continuously performing the inspection using the aforesaid method, the shuttle vehicle reports the offset information (the offset distance and/or the offset angle) of each piece of goods to the host computer, and the host computer may store the offset information reported by the shuttle vehicle in the inspection process to facilitate a data analysis.

FIG. 4 is a schematic diagram of structures of a rack, a hoister and the shuttle vehicle provided by the disclosure. As shown in FIG. 4, at the entrance and exit (or only at the entrance) of the rack, a conveyor line 4 having a weighing function is used, when a piece of goods put in storage passes by the conveyor line 4, the host computer may obtain the weight of the piece of goods, and then the piece of goods is placed in a certain storage location by means of a succession of a hoister 5, a buffer location 6 and the shuttle vehicle 1 successively.

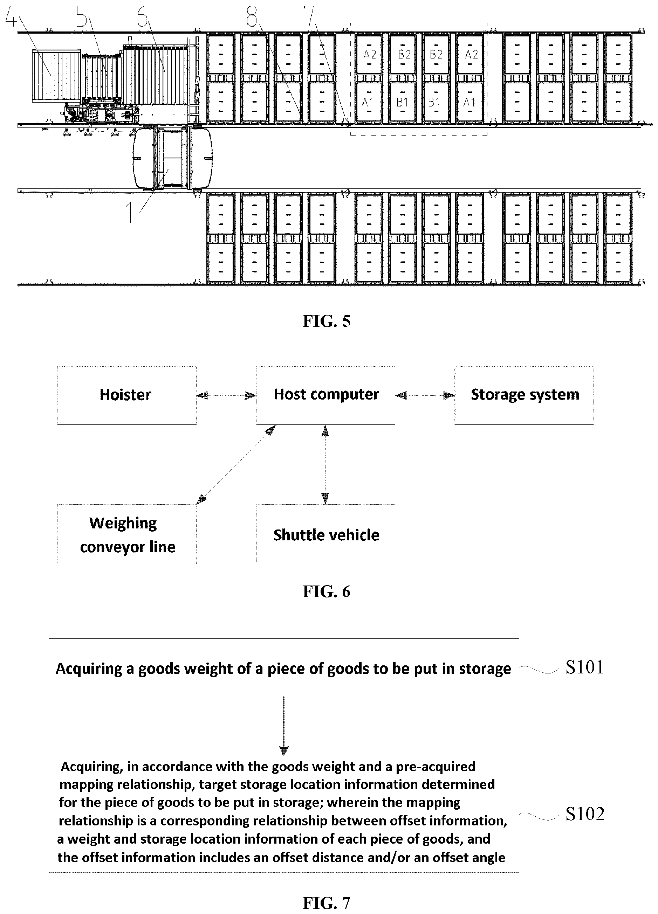

FIG. 5 is a schematic diagram of putting goods in storage by a shuttle vehicle system provided by the disclosure. As shown in FIG. 5, from the perspective of the entire system and the control level, in the previous inspection process, the shuttle vehicle uploads the offset distance and the offset angle of each piece of goods to the host computer for storage. By taking into consideration the weight information of each piece of goods when being put in storage and the location information of each piece of goods, the host computer may obtain by statistics the relationship between the offset distance and/or the distance angle of each piece of goods and the goods location and goods weight. Taking a goods compartment composed of goods locations in the dotted line in FIG. 5 as an example, in accordance with the differences of the distances between the goods and a post 7 and the distances between the goods and a guide rail 8, the goods locations in each goods compartment may be divided into four partitions A1, A2, B1 and B2, which may also be called classification (such classification does not conflict with the strategy based on the retrieving and placing frequencies of the goods in the previous technology, for the goods partitions of each goods compartment are basically the same, and the distance between each goods compartment and the hoister is different, so the strategy optimized based on the weights and the offsets and the strategy optimized based on the retrieving and placing frequencies do not interfere with each other). Finally, the host computer formulates the optimal storage strategy based on the corresponding relationship obtained by statistics. A new storage location may be re-allocated for each piece of goods in the subsequent operations of putting the goods in storage and delivering the goods from storage.

The technical solution for determining a goods storage location provided by the disclosure is described in detail below by several specific embodiments.

FIG. 6 is a schematic diagram of the shuttle vehicle system provided by the disclosure. As shown in FIG. 6, the shuttle vehicle system comprises at least a host computer, as well as a shuttle vehicle, a hoister and a weighing conveyor line respectively communicating and connected with the host computer;

wherein the shuttle vehicle is used for putting the goods in storage, delivering the goods from storage, and inspecting the goods in accordance with instructions from the host computer, the hoister is used for cooperating with the shuttle vehicle to lift the goods in accordance with the instructions from the host computer, the weighing conveyor line is used for determining the weight of each piece of goods, and the host computer is used for analyzing data in a storage system to control the other devices to carry out tasks such as putting the goods in storage, delivering the goods from storage, and inspecting the goods.

In the technical implementation of the technical solution of the disclosure, the system control solution is mainly carried out by the host computer, and the solution for determining a goods storage location by the host computer is described in detail below by several embodiments.

FIG. 7 is a flow chart of Embodiment I of a method for determining a goods storage location provided by the disclosure. As shown in FIG. 7, the method for determining a goods storage location comprises the following specific steps:
S101: Acquiring a goods weight of a piece of goods to be put in storage.

In the step, when the host computer receives that a new piece of goods is to be put in storage, or a piece of goods that is retrieved is to be put in storage again, that is, when it is required to re-determine the storage location for the piece of goods, the goods for which the storage locations are to be determined are collectively referred to as goods to be put in storage.

When determining that a piece of goods is to be put in storage, the host computer is required to acquire the goods weight of the piece of goods to be put in storage, and specifically, if a piece of goods to be put in storage again is involved, the weight reported by the weighting conveyor line when the piece of goods is put in storage may be directly read from the stored data; if a new piece of goods to be put in storage is involved, the piece of goods to be put in storage may be weighed by the weighing conveyor line to obtain the goods weight.

S102: Acquiring, in accordance with the goods weight and a pre-acquired mapping relationship, target storage location information determined for the piece of goods to be put in storage; wherein the mapping relationship is a corresponding relationship between offset information, a weight and storage location information of each piece of goods, and the offset information includes an offset distance and/or an offset angle.

In the step, in the actual process of storing and retrieving the goods, the shuttle vehicle may collect offset information of each piece of goods in the inspection process, and the offset information includes at least an offset distance and/or an offset angle. The host computer can obtain the mapping relationship between the offset information, the weight and the storage location information by analyzing the weight and the storage location information (the specific storage location, the distance from the hoister, or the like) of each piece of goods and the offset information of the piece of goods, and the mapping relationship can represent the actual impacts of the weight and the storage location information on the offset condition.

When it is required to arrange a storage location for a piece of goods, the host computer may determine, in accordance with the aforesaid mapping relationship and the acquired goods weight, a storage location with the smallest offset information corresponding to the goods weight in the rack as a target storage location of the piece of goods to be put in storage to obtain the target storage location information.

That is to say, the storage location with the smallest offset corresponding to the goods weight is selected from all the storage locations, and the piece of goods is subsequently stored in the storage location to prevent too large an offset of the piece of goods due to vibrations or the like.

In the specific implementation of the solution, the host computer may perform the storage location planning only in accordance with the goods weight and the aforesaid mapping relationship, and in order to further optimize the storage location planning, the host computer may also consider the impacts of the storing and retrieving frequency, the offset information, and so on at the same time.

To be specific, in such implementation, the host computer may also acquire the storing and retrieving frequencies of the goods. Specifically, as for the storing and retrieving frequency of the piece of goods to be put in storage, it may be manually configured by a staff member in accordance with the conditions of the articles in the piece of goods, or directly acquired by the host computer from the parameter data of the piece of goods configured beforehand, or acquired from the historical storing and retrieving data of the piece of goods, and the solution does not make limitations therefor.

When it is required to determine the storage location information for a piece of goods to be put in storage, in the solution, the impact of the storing and retrieving frequency should be comprehensively considered, i.e., when the storage location planning is performed, the principle that the goods with higher storing and retrieving frequencies are closer to the hoister should still be met, and meanwhile the storage location with the smallest offset may be selected to place the piece of goods based on the aforesaid mapping relationship obtained by statistics by the host computer and the goods weight of the piece of goods to be put in storage.

In the specific implementation of the solution, the host computer may determine the target storage location information of the piece of goods to be put in storage by at least the following two implementation schemes:
The first implementation scheme is to determine, in accordance with the storing and retrieving frequency of the piece of goods to be put in storage, a target goods partition that satisfies a preset frequency optimization strategy in racks, wherein the frequency optimization strategy indicates that the higher the storing and retrieving frequency of the piece of goods is, the closer to a hoister the piece of goods is, and the goods compartment of the rack includes a plurality of goods partitions that are allocated in advance in accordance with distances from a post and distances from a guide rail.

Then, in accordance with the goods weight and the mapping relationship, a storage location with the smallest offset information corresponding to the goods weight in the target goods partition is determined as a target storage location of the piece of goods to be put in storage to obtain the target storage location information.

In the solution, the area inside the rack is divided in advance into a plurality of goods partitions based on the distances from the post of the rack and the distances from the guide rail. Each goods partition may include one or more storage locations. The host computer first determines, in accordance with the storing and retrieving frequency, an optimal partition that satisfies the preset frequency optimization strategy in the goods compartment, i.e., selecting, based on the rule that the higher the storing and retrieving frequency of the piece of goods is, the closer to a hoister the piece of goods is, the optimal partition in the goods compartment of the rack as the target goods partition. There may be one or more target goods partitions. Then, in accordance with the goods weight of the piece of goods to be put in storage and the aforesaid mapping relationship, a storage location with the smallest offset information corresponding to the goods weight is selected from the target goods partition as the storage location of the piece of goods to be put in storage to obtain the final target storage location information.

The second implementation scheme is to determine, in accordance with the goods weight and the mapping relationship, a plurality of storage locations with the offset information corresponding to the goods weight being less than a preset threshold in racks.

Then, in accordance with the storing and retrieving frequency of the piece of goods to be put in storage, a target storage location that satisfies a preset frequency optimization strategy is determined from the plurality of storage locations to obtain the target storage location information, wherein the frequency optimization strategy indicates that the higher the storing and retrieving frequency of the piece of goods is, the closer to a hoister the piece of goods is.

In the solution, the host computer first determines, in accordance with the goods weight of the piece of goods to be put in storage and the aforesaid mapping relationship, a plurality of storage locations with comparatively small offset information corresponding to the goods weight in all the racks. In the specific implementation of the solution, two or more storage locations with the smallest offset information may be directly acquired; or a threshold of the offset information may be preset, and determination is performed in the specific implementation to acquire all the storage locations with the offset information corresponding to the goods weight being less than the preset threshold; or the number of the acquired storage locations may be directly set, and the number of the storage locations with the smallest offset information corresponding to the goods weight are directly acquired. The solution does not make limitations therefor.

After determining a plurality of storage locations with offset information meeting the condition, the host computer selects, in accordance with the storing and retrieving frequency of the piece of goods to be put in storage, the most appropriate target storage location from the plurality of storage locations as the storage location for the piece of goods to be put in storage to finally obtain the target storage location information based on the frequency optimization strategy, that is, the strategy that the higher the storing and retrieving frequency of the piece of goods is, the closer to a hoister the piece of goods is.

According to the method for determining a goods storage location provided by the embodiment, when the host computer is required to perform storage location planning on goods to be put in storage, it analyzes in advance, on the basis of the existing rule of storing and retrieving frequencies, the locations and weights of the goods and the offset information corresponding to the goods to obtain the aforesaid mapping relationship, and when a specific piece of goods is put in storage and the storage location thereof is determined, the storage location of the piece of goods is comprehensively planned by taking the impacts of the location and weight of the piece of goods on the offset information into consideration, thereby reducing the offset of the piece of goods under the impact of a shuttle vehicle, and preventing problems such as a failure to retrieve the piece of goods caused by too large an offset of the piece of goods. Furthermore, the storing and retrieving frequency as well as the impacts of the location and weight of the piece of goods on the offset information may further be comprehensively considered to further optimize the storage location planning, and prevent the consequences caused by too large an offset of the piece of goods.

On the basis of the aforesaid embodiment, after completing the storage location planning, that is, determining the target storage location information, the host computer is further required to put the piece of goods to be put in storage based on the target storage location information. To be specific, the host computer sends, in accordance with the target storage location information, to a shuttle vehicle a command for putting goods in storage for instructing the shuttle vehicle to place the piece of goods to be put in storage in a location indicated by the target storage location information.

The host computer issues, in accordance with the determined target storage location information, an instruction for putting the piece of goods to be put in storage to the shuttle vehicle, and the shuttle vehicle transports, in accordance with the command of the host computer, the piece of goods to be put in storage to the location indicated by the target storage location information to complete the process of putting the piece of goods in storage.

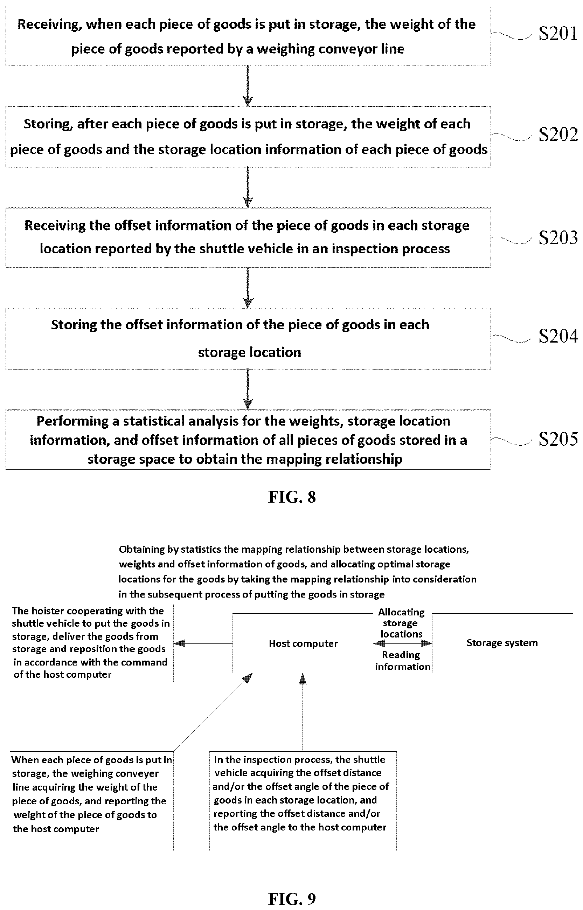

FIG. 8 is a flow chart of Embodiment II of the method for determining a goods storage location provided by the disclosure. As shown in FIG. 8, before the specific application of any of the aforesaid embodiments, the method for determining a goods storage location comprises the following specific steps:
S201: Receiving, when each piece of goods is put in storage, the weight of the piece of goods reported by a weighing conveyor line.

In the step, in the process of putting each piece of goods in storage, the piece of goods is required to be weighed by the weighing conveyor line, and the weighing conveyor line may report the weight of the piece of goods to the host computer.

S202: Storing, after each piece of goods is put in storage, the weight of each piece of goods and the storage location information of each piece of goods.

In the step, after receiving the weight of the piece of goods, the host computer is required to store the weight of the piece of goods. Meanwhile, after allocating a storage location for the piece of goods and putting the piece of goods in storage, the host computer is also required to store the storage location information of the piece of goods.

The weights and storage location information of the goods may be stored in a storage system of the entire system. The storage system may be a storage system in the host computer or an external storage system that can be accessed by the host computer. The solution does not make limitations therefor.

S203: Receiving the offset information of the piece of goods in each storage location reported by the shuttle vehicle in an inspection process.

S204: Storing the offset information of the piece of goods in each storage location.

In the aforesaid two steps, in the inspection process of the shuttle vehicle, after detecting the offset information of each piece of goods, the shuttle vehicle is required to report the offset information to the host computer, and the host computer receives the offset information of each piece of goods reported by the shuttle vehicle, and also stores the offset information in accordance with the identifier of the piece of goods.

S205: Performing a statistical analysis for the weights, storage location information, and offset information of all pieces of goods stored in a storage space to obtain the mapping relationship.

After acquiring enough data, the host computer may determine a certain regularity or rules in accordance with a big data analysis. In the solution, after acquiring enough weights, storage location information and offset information of the goods, the host computer may perform a statistical analysis for the above data to obtain by statistics the relationship between the offset distance and/or the offset angle of each piece of goods and the location and the weight of the piece of goods, i.e., the aforesaid mapping relationship.

In the subsequent process of putting the goods in storage, the host computer may determine, in accordance with the relationship obtained by statistics, the most appropriate target storage locations for the goods based on the strategy optimized based on the weights and the offset information of the goods and the strategy optimized based on the retrieving and placing frequencies

FIG. 9 is a schematic diagram of the function of the shuttle vehicle system provided by the disclosure. As shown in FIG. 9 and the descriptions in the aforesaid embodiments, in the entire solution for determining a goods storage location, the hoister is mainly used for cooperating with the shuttle vehicle to complete the operations such as putting the goops in storage, delivering the goods from storage, picking the goods, and repositioning the goods in accordance with the command of the host computer. The weighting conveyor line not only may acquire the weight of the piece of goods to be put in storage, but also may transport the piece of goods in accordance with the command of the host computer. In the inspection process, as introduced above, the shuttle vehicle acquires the offset distance and/or the offset angle of the piece of goods in each storage location, and reports the offset distance and/or the offset angle to the host computer. The host computer stores the acquired data and information in the storage system, and it may make an analysis based on the relevant information in the storage system to obtain by statistics the mapping relationship, and allocate optimal storage locations for the goods subsequently put in storage.

In the solution for determining a goods storage location provided by the disclosure, a laser ranging module installed in the shuttle vehicle is used for measuring the distance of the face of the piece of goods close to the vehicle body, and in combination with the existing displacement sensor and positioning sensor, the laser ranging module may obtain by calculation the offset distance and the offset angle of the piece of goods, and reports the offset distance and the offset angle to the host computer to provide data for subsequent optimization of the storage location. The upper host may have an additional weighing function by means of a conveyor line for putting the goods in storage to acquire the weight of each piece of goods put in storage to further provide data for subsequent optimization of the storing strategy. Finally, the host computer performs a statistical analysis for the weights of the goods as well as the offset information of the goods and the storage locations of the goods obtained by the previous inspection to obtain the mapping relationship. In the subsequent process of allocating the storage locations for the goods, the optimal storage locations are allocated for the goods by taking the existing rule and the mapping relationship into consideration. The goods may also be re-stored in the subsequent operations of putting the goods in storage and delivering the goods from storage. The offset affected by the weight and location of the piece of goods is reduced as far as possible to prevent too large an offset of the piece of goods due to the vibration so as to further prevent a problem that the piece of goods cannot be accurately retrieved.

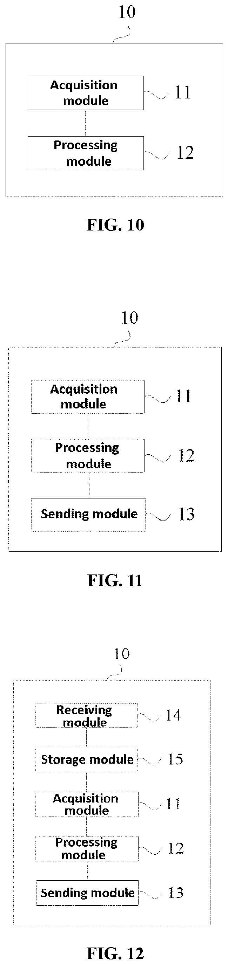

FIG. 10 is a schematic diagram of a structure of Embodiment I of an apparatus for determining a goods storage location provided by the disclosure. As shown in FIG. 10, the apparatus 10 for determining a goods storage location comprises:
an acquisition module 11 for acquiring a goods weight of a piece of goods to be put in storage;
a processing module 12 for acquiring, in accordance with the goods weight and a pre-acquired mapping relationship, target storage location information determined for the piece of goods to be put in storage; wherein the mapping relationship is a corresponding relationship between offset information, a weight and storage location information of each piece of goods, and the offset information includes an offset distance and/or an offset angle.

Optionally, in a specific implementation of the apparatus 10 for determining a goods storage location, the acquisition module 11 is further used for:
acquiring a storing and retrieving frequency of the piece of goods to be put in storage;
correspondingly, the processing module 12 is specifically used for:
   acquiring, in accordance with the goods weight, the storing and retrieving frequency and the mapping relationship, the target storage location information determined for the piece of goods to be put in storage.

The apparatus for determining a goods storage location provided by the embodiment is used for performing the technical solution of the host computer in any of the aforesaid method embodiments, and the implementation principle and the technical effect thereof are similar to those in the method embodiment. After receiving that there are goods to be put in storage, the host computer analyzes in advance, on the basis of the existing rule of storing and retrieving frequencies, the locations and weights of the goods and the offset information corresponding to the goods to obtain the aforesaid mapping relationship, and when a specific piece of goods is put in storage and the storage location thereof is determined, the storage location of the piece of goods is comprehensively planned by taking the impacts of the location and weight of the piece of goods on the offset information into consideration, thereby reducing the offset of the piece of goods under the impact of a shuttle vehicle, and preventing problems such as a failure to retrieve the piece of goods caused by too large an offset of the piece of goods.

FIG. 11 is a schematic diagram of a structure of Embodiment II of the apparatus for determining a goods storage location provided by the disclosure. As shown in FIG. 11, on the basis of Embodiment I above, the apparatus 10 for determining a goods storage location further comprises:
a sending module 13 for sending, in accordance with the target storage location information, to a shuttle vehicle a command for putting goods in storage for instructing the shuttle vehicle to place the piece of goods to be put in storage in a location indicated by the target storage location information.

In a specific implementation scheme, the processing module 12 is specifically used for:
determining, in accordance with the goods weight and the mapping relationship, a storage location with the smallest offset information corresponding to the goods weight in the storage locations of racks as a target storage location of the piece of goods to be put in storage to obtain the target storage location information.

In a specific implementation scheme, the processing module 12 is specifically used for:
determining, in accordance with the storing and retrieving frequency of the piece of goods to be put in storage, a target goods partition that satisfies a preset frequency optimization strategy in goods compartments of racks, wherein the frequency optimization strategy indicates that the higher the storing and retrieving frequency of the piece of goods is, the closer to a hoister the piece of goods is, and the goods compartment of the rack includes a plurality of goods partitions that are allocated in advance in accordance with distances from a post and distances from a guide rail;
determining, in accordance with the goods weight and the mapping relationship, a storage location with the smallest offset information corresponding to the goods weight in the target goods partition as a target storage location of the piece of goods to be put in storage to obtain the target storage location information.

In a specific implementation scheme, the processing module 12 is specifically used for:
determining, in accordance with the goods weight and the mapping relationship, a plurality of storage locations with the offset information corresponding to the goods weight being less than a preset threshold in goods compartments of racks;
determining, in accordance with the storing and retrieving frequency of the piece of goods to be put in storage, a target storage location that satisfies a preset frequency optimization strategy from the plurality of storage locations to obtain the target storage location information, wherein the frequency optimization strategy indicates that the higher the storing and retrieving frequency of the piece of goods is, the closer to a hoister the piece of goods is.

FIG. 12 is a schematic diagram of a structure of Embodiment III of the apparatus for determining a goods storage location provided by the disclosure. As shown in FIG. 12, on the basis of Embodiment I or Embodiment II above, the apparatus for determining a goods storage location 10 further comprises:
a receiving module 14 for receiving the offset information of the piece of goods in each storage location reported by the shuttle vehicle in an inspection process;
a storage module 15 for storing the offset information of the piece of goods in each storage location.

In a specific implementation scheme, the receiving module 14 is further used for receiving, when each piece of goods is put in storage, the weight of the piece of goods reported by a weighing conveyor line;
the storage module 15 is further used for storing, after each piece of goods is put in storage, the weight of each piece of goods and the storage location information of each piece of goods.

In another specific implementation scheme, the receiving module 12 is further used for:
performing a statistical analysis for the weights, storage location information, and offset information of all pieces of goods stored in a storage space to obtain the mapping relationship.

In another specific implementation scheme, the acquisition module 11 is further used for:
receiving the goods weight of the piece of goods to be put in storage reported by the weighing conveyor line.

In another specific implementation scheme, the acquisition module 11 is specifically used for:
acquiring, in accordance with configuration information of the piece of goods to be put in storage input by a user or pre-acquired, the storing and retrieving frequency of the piece of goods to be put in storage.

The apparatus for determining a goods storage location provided by any of the aforesaid implementation schemes is used for performing the technical solution of the host computer in any of the aforesaid method embodiments, the implementation principle and the technical effect thereof are similar to those in the method embodiment, and no unnecessary details are further given herein.

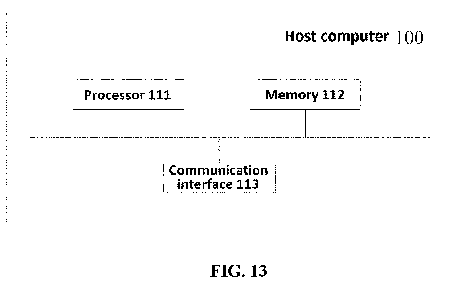

FIG. 13 is a schematic diagram of a structure of an embodiment of a host computer provided by the disclosure. As shown in FIG. 13, the host computer 100 comprises:
a processor 111, a memory 112, and a communication interface 113; the memory 112 being used for storing executable instructions of the processor 111;
wherein the processor 111 is configured to perform the technical solution of the method for determining a goods storage location provide by any of the aforesaid method embodiments by executing the executable instructions.

Optionally, the memory 112 may be independent or integrated with the processor 111.

Optionally, when the memory 112 is a device independent of the processor 111, the host computer 100 may also comprise a bus for connecting the aforesaid devices.

The host computer is used for performing the technical solution of any of the aforesaid method embodiments, the implementation principle and the technical effect thereof are similar to those in the method embodiment, and no unnecessary details are further given herein.

The embodiments of the disclosure provide a readable storage medium, on which a computer program is stored, the computer program, when executed by a processor, performing the technical solution provided by any of the aforesaid method embodiments.

The embodiments of the disclosure provide a computer program product, comprising a computer program, which, when executed by a processor, performs the technical solution provided by any of the aforesaid method embodiments.

Those skilled in the art may understand that all or part of the steps for implementing the aforesaid method embodiments may be completed by hardware related to program instructions. The aforementioned program may be stored in a computer-readable storage medium. During the execution of the program, the steps including the aforesaid method embodiments are performed; and the aforementioned storage medium includes: ROM, RAM, a magnetic disk, an optical disk and other media that may store program codes.

Finally, it should be noted that the above respective embodiments are only used for describing the technical solutions of the disclosure rather than making limitations therefor; although the disclosure is described in detail with reference to the aforesaid embodiments, those skilled in the art should understand that they may still make modifications of the technical solutions recorded in the aforesaid respective embodiments or make equivalent substitutions of part or all of the technical features therein; and these modifications or substitutions will not make the essence of the corresponding technical solutions break away from the scope of the technical solutions of the respective embodiments of the disclosure.

## Claims

1. A method for determining a goods storage location, **characterized in that** the method comprises:
acquiring a goods weight of a piece of goods to be put in storage;
acquiring, in accordance with the goods weight and a pre-acquired mapping relationship, target storage location information determined for the piece of goods to be put in storage; wherein the mapping relationship is a corresponding relationship between offset information, a weight and storage location information of each piece of goods, and the offset information includes an offset distance and/or an offset angle.

2. The method of claim 1, **characterized in that** the method further comprises:
acquiring a storing and retrieving frequency of the piece of goods to be put in storage;
correspondingly, the step of acquiring, in accordance with the goods weight and a pre-acquired mapping relationship, target storage location information determined for the piece of goods to be put in storage comprising:
acquiring, in accordance with the goods weight, the storing and retrieving frequency and the mapping relationship, the target storage location information determined for the piece of goods to be put in storage.

3. The method of claim 2, **characterized in that** the step of acquiring, in accordance with the goods weight, the storing and retrieving frequency and the mapping relationship, the target storage location information determined for the piece of goods to be put in storage comprises:
determining, in accordance with the storing and retrieving frequency of the piece of goods to be put in storage, a target goods partition that satisfies a preset frequency optimization strategy in racks, wherein the frequency optimization strategy indicates that the higher the storing and retrieving frequency of the piece of goods is, the closer to a hoister the piece of goods is, and the rack includes a plurality of goods partitions that are allocated in advance in accordance with distances from a post and distances from a guide rail;
determining, in accordance with the goods weight and the mapping relationship, a storage location with the smallest offset information corresponding to the goods weight in the target goods partition as a target storage location of the piece of goods to be put in storage to obtain the target storage location information.

4. The method of claim 2, **characterized in that** the step of acquiring, in accordance with the goods weight, the storing and retrieving frequency and the mapping relationship, the target storage location information determined for the piece of goods to be put in storage comprises:
determining, in accordance with the goods weight and the mapping relationship, a plurality of storage locations with the offset information corresponding to the goods weight being less than a preset threshold in racks;
determining, in accordance with the storing and retrieving frequency of the piece of goods to be put in storage, a target storage location that satisfies a preset frequency optimization strategy from the plurality of storage locations to obtain the target storage location information, wherein the frequency optimization strategy indicates that the higher the storing and retrieving frequency of the piece of goods is, the closer to a hoister the piece of goods is.

5. The method of claim 1, **characterized in that** the step of acquiring, in accordance with the goods weight and a pre-acquired mapping relationship, target storage location information determined for the piece of goods to be put in storage comprises:
determining, in accordance with the goods weight and the mapping relationship, a storage location with the smallest offset information corresponding to the goods weight in the storage locations of racks as a target storage location of the piece of goods to be put in storage to obtain the target storage location information.

6. The method of any of claims 1-5, **characterized in that** the method further comprises:
sending, in accordance with the target storage location information, to a shuttle vehicle a command for putting goods in storage for instructing the shuttle vehicle to place the piece of goods to be put in storage in the location indicated by the target storage location information.

7. The method of any of claims 1-6, **characterized in that** before the step of acquiring, in accordance with the goods weight and a pre-acquired mapping relationship, target storage location information determined for the piece of goods to be put in storage, the method further comprises:
receiving the offset information of the piece of goods in each storage location reported by the shuttle vehicle in an inspection process;
storing the offset information of the piece of goods in each storage location.

8. The method of claim 7, **characterized in that** the method further comprises:
receiving, when each piece of goods is put in storage, the weight of the piece of goods reported by a weighing conveyor line;
storing, after each piece of goods is put in storage, the weight of each piece of goods and the storage location information of each piece of goods.

9. The method of claim 8, **characterized in that** the method further comprises:
performing a statistical analysis for the weights, storage location information, and offset information of all pieces of goods stored in a storage space to obtain the mapping relationship.

10. The method of any of claims 1-9, **characterized in that** the step of acquiring a goods weight of a piece of goods to be put in storage comprises:
receiving the goods weight of the piece of goods to be put in storage reported by the weighing conveyor line.

11. The method of any of claims 2-4, **characterized in that** the step of acquiring a storing and retrieving frequency of the piece of goods to be put in storage comprises:
acquiring, in accordance with configuration information of the piece of goods to be put in storage input by a user or pre-acquired, the storing and retrieving frequency of the piece of goods to be put in storage.

12. An apparatus for determining a goods storage location, **characterized in that** the apparatus comprises:
an acquisition module for acquiring a goods weight and a storing and
retrieving frequency of a piece of goods to be put in storage;
a processing module for acquiring, in accordance with the goods weight and a pre-acquired mapping relationship, target storage location information determined for the piece of goods to be put in storage; wherein the mapping relationship is a corresponding relationship between offset information, a weight and storage location information of each piece of goods, and the offset information includes an offset distance and/or an offset angle.

13. A host computer, **characterized by** comprising:
a processor, a memory, and a communication interface;
the memory being used for storing executable instructions of the processor;
wherein the processor is configured to perform the method for determining a goods storage location according to any of claims 1 to 11 by executing the executable instructions.

14. A shuttle vehicle system, **characterized by** comprising:
the host computer according to claim 13, as well as a shuttle vehicle, a hoister and a weighing conveyor line respectively communicating and
connected with the host computer;
wherein the shuttle vehicle is used for putting the goods in storage,
delivering the goods from storage, and inspecting the goods in accordance with instructions from the host computer, the hoister is used for cooperating with the shuttle vehicle to lift the goods in accordance with the instructions from the host computer, and the weighing conveyor line is used for determining the weight of each piece of goods.

15. A readable storage medium, on which a computer program is stored, **characterized in that** the computer program, when executed by a processor, performs the method for determining a goods storage location according to any of claims 1 to 11.

16. A computer program product, **characterized by** comprising a computer program, which, when executed by a processor, performs the method for determining a goods storage location according to any of claims 1 to 11.
